# EUROPÄISCHE PATENTSCHRIFT

(11) **EP 3 897 327 B1**
(45) Veröffentlichungstag und Bekanntmachung des Hinweises auf die Patenterteilung: **27.11.2024**
(21) Anmeldenummer: 19824278.6
(22) Anmeldetag: 12.12.2019
(51) Int. Cl.: A47L 7/00, B60S 3/00

(54) **VERFAHREN ZUM REINIGEN EINES INNENRAUMS EINES FAHRZEUGS, MOBILER REINIGUNGSROBOTER, MOBILE HEBEVORRICHTUNG UND SYSTEM**
METHOD FOR CLEANING THE INTERIOR OF A VEHICLE, MOBILE CLEANING ROBOT, MOBILE LIFTING DEVICE, AND SYSTEM
PROCÉDÉ DE NETTOYAGE D'UN HABITACLE D'UN VÉHICULE, ROBOT NETTOYEUR MOBILE, DISPOSITIF ÉLÉVATEUR MOBILE ET SYSTÈME

(30) Priorität: 20.12.2018 DE 102018222657
(43) Veröffentlichungstag der Anmeldung: 27.10.2021
(73) Patentinhaber: VOLKSWAGEN AKTIENGESELLSCHAFT, 38440 Wolfsburg (DE)
(72) Erfinder: SCHÜTZ, Daniel, 38165 Lehre (DE)
(86) Internationale Anmeldenummer: PCT/EP2019/084924
(87) Internationale Veröffentlichungsnummer: WO 2020/126832

(56) Entgegenhaltungen:
- DE-A1- 102016 009 585
- DE-A1- 102016 215 525
- US-A1- 2010 106 298
- US-A1- 2016 334 801

## Beschreibung

Die Erfindung betrifft ein Verfahren zum Reinigen eines Innenraums eines Fahrzeugs, einen mobilen Reinigungsroboter, eine mobile Hebevorrichtung und ein System.

Der Innenraum eines Fahrzeugs verschmutzt mit fortschreitendem Gebrauch des Fahrzeugs. Hierbei sammeln sich insbesondere Staub und Schmutzpartikel auf Oberflächen in dem Innenraum des Fahrzeugs an und können sowohl ein Wohlbefinden als auch eine Gesundheit der Fahrzeuginsassen des Fahrzeugs beeinträchtigen. Dies ist insbesondere der Fall, wenn in dem Fahrzeug wechselnde Fahrzeuginsassen befördert werden, wie beispielsweise beim Carsharing oder Ridesharing.

Eine Reinigung des Innenraums des Fahrzeugs erfolgt in der Regel per Hand mittels eines Staubsaugers. Hierzu wird eine Ansaugdüse über Oberflächen im Innenraum geführt, vorhandener Staub und Schmutzpartikel werden weggesaugt und in einem Sammelbehälter aufgefangen. Dies ist zeitraubend und umständlich.

Aus der WO 01/37060 A1 ist ein mobiler Hausreinigungsroboter bekannt, der autonom arbeitet. Aus der US 2010/0106298 A1 ist ein autonom arbeitender Reinigungsroboter mit einem mehrgliedrigen Arm bekannt. Aus der US 2018/0228335 A1 ist eine Basisstation für einen mobilen Staubsaugerroboter bekannt.

Aus der DE 10 2016 009 585 A1 ist ein Reinigungsgerät für einen Innenraum eines Kraftwagens bekannt, mit einer Saugeinrichtung mit einer Steuereinheit und mit einem Gebläse zum Erzeugen eines Saugunterdrucks, welches wenigstens eine Verbindung mit einer kraftfahrzeugseitigen Einrichtung umfasst. Um den Komfort für den Nutzer zu erhöhen und dessen Zeitaufwand für die Reinigung eines Kraftwagens zu verringern, ist das Reinigungsgerät als automatisch betreibbarer Saugroboter ausgebildet, dessen Steuereinheit über wenigstens eine Steuerungsverbindung mit einer kraftfahrzeugseitigen Steuerungseinrichtung verbunden ist.

Aus der US 2016/0334801 A1 ist ein autonomer modularer Roboter bekannt, dieser umfasst ein Aufsatzhaltesystem, das zwei oder mehr austauschbare Aufsätze hält, um Aufgaben auszuführen, z. B. Dampfreinigung, Staubsaugen, Grasmähen usw. Die Zusatzgeräte können sequentiell in der Bewegungsbahn des Roboters positioniert und konfiguriert sein, um komplementäre Aufgaben auszuführen. Zum Reinigen eines Bodens kann beispielsweise ein erster Aufsatz konfiguriert sein, um den Boden zu saugen, und ein zweiter Aufsatz kann konfiguriert sein, um den Boden mit Dampf zu reinigen. Der Roboter kann auch einen vertikal verschiebbaren Hubmechanismus umfassen. Der Hubmechanismus kann das Befestigungselement-Rückhaltesystem umfassen, wodurch ermöglicht wird, dass die Befestigungselemente vertikal bewegt werden. Der Hubmechanismus kann auch einen Dimensionssensor in der Nähe einer Oberseite des Hubmechanismus umfassen. Der Dimensionssensor kann verwendet werden, um die Größe zu bestimmen, z. B. eine Höhe und/oder eine Breite des Roboters mit allen zurückgehaltenen Anbauteilen, um beim Navigieren des Roboters zu helfen und Hindernisse zu vermeiden.

Der Erfindung liegt die Aufgabe zu Grunde, ein Verfahren zum Reinigen eines Innenraums eines Fahrzeugs, einen mobilen Reinigungsroboter und ein System zu schaffen, mit denen das Reinigen eines Innenraums eines Fahrzeugs verbessert durchgeführt werden kann.

Die Aufgabe wird erfindungsgemäß durch ein Verfahren mit den Merkmalen des Patentanspruchs 1, einen mobilen Reinigungsroboter mit den Merkmalen des Patentanspruchs 4 und ein System mit den Merkmalen des Patentanspruchs 9 gelöst. Vorteilhafte Ausgestaltungen der Erfindung ergeben sich aus den Unteransprüchen.

Insbesondere wird in einem ersten Aspekt der Erfindung ein Verfahren zum Reinigen eines Innenraums eines Fahrzeugs zur Verfügung gestellt, umfassend die folgenden Schritte: Einbringen von mindestens einem mobilen Reinigungsroboter auf einen Fahrzeugboden im Innenraum des Fahrzeugs mittels einer mobilen Hebevorrichtung, wobei der mindestens eine mobile Reinigungsroboter von einer Roboteraufnahme der mobilen Hebevorrichtung auf einer Höhe des Fahrzeugbodens durch eine geöffnete Fahrzeugtür in den Innenraum fährt, Anordnen des mindestens einen mobilen Reinigungsroboters an einer vorgegebenen Position auf dem Fahrzeugboden im Innenraum des Fahrzeugs, wobei der mobile Reinigungsroboter über den Fahrzeugboden an die vorgegebene Position fährt, Durchführen eines vorgegebenen Reinigungsprogramms an der vorgegebenen Position mittels des mindestens einen mobilen Reinigungsroboters, wobei das Reinigen ein Führen mindestens eines Reinigungswerkzeugs mittels eines Führungsmittels des mobilen Reinigungsroboters umfasst, Entfernen des mindestens einen mobilen Reinigungsroboters aus dem Innenraum des Fahrzeugs, wobei der mindestens eine mobile Reinigungsroboter zurück in die Roboteraufnahme der mobilen Hebevorrichtung fährt.

In einem zweiten Aspekt der Erfindung wird ein mobiler Reinigungsroboter zum Reinigen eines Innenraums eines Fahrzeugs geschaffen, umfassend mindestens ein Reinigungswerkzeug, mindestens ein Führungsmittel zum Aufnehmen und Führen des mindestens einen Reinigungswerkzeugs, eine bewegbare Basiseinrichtung zum Bewegen des Reinigungsroboters auf einem Fahrzeugboden im Innenraum des Fahrzeugs, und eine Steuerung zum Ansteuern der bewegbaren Basiseinrichtung und des mindestens einen Führungsmittels, sodass an einer vorgegebenen Position im Innenraum ein vorgegebenes Reinigungsprogramm durchgeführt werden kann, wobei die Steuerung dazu eingerichtet ist, den mobilen Reinigungsroboter von einer Roboteraufnahme einer mobilen Hebevorrichtung aus an die vorgegebene Position in dem Innenraum des Fahrzeugs zu fahren und nach Durchführen des vorgegebenen Reinigungsprogramms wieder zurück in die Roboteraufnahme zu fahren.

In einem dritten Aspekt der Erfindung wird eine mobile Hebevorrichtung geschaffen, umfassend mindestens eine Roboteraufnahme zum Aufnehmen von mindestens einem mobilen Reinigungsroboter und eine Transporteinrichtung, wobei die Transporteinrichtung höhenverstellbar ausgebildet ist, sodass die mindestens eine Roboteraufnahme auf eine Höhe eines Fahrzeugbodens eines Fahrzeugs gebracht werden kann. Hierbei ist die Mobile Hebevorrichtung dazu geeignet, einen mobilen Roboter zu handhaben, um diesen sicher in das Innere des Fahrzeuges zu führen. Die Hebevorrichtung kann hierbei den mobilen Roboter positionieren, damit dieser in den Innenraum des Fahrzeuges gelangt. Die Geometrie der Roboteraufnahme ist der Geometrie eines Teilbereiches des mobilen Roboters angepasst. Ferner kann die Hebevorrichtung pneumatische, elektrostatische, magnetische, mechanische Einrichtungen aufweisen, um einen Hub zu generieren und um den mobilen Roboter positionieren zu können.

In einem vierten Aspekt der Erfindung wird ein System zum Reinigen eines Innenraums eines Fahrzeugs geschaffen, umfassend mindestens eine mobile Hebevorrichtung gemäß dem dritten Aspekt der Erfindung und mindestens einen mobilen Reinigungsroboter gemäß dem zweiten Aspekt der Erfindung.

Es ist ein Grundgedanke der Erfindung, einen Innenraum eines Fahrzeugs mittels mindestens eines mobilen Reinigungsroboters zu reinigen und diesen hierzu mittels einer mobilen Hebevorrichtung auf einen Fahrzeugboden in das Fahrzeug einzubringen. Der mindestens eine mobile Reinigungsroboter befindet sich anfangs in einer Roboteraufnahme der mobilen Hebevorrichtung. Die mobile Hebevorrichtung wird an einer geöffneten Fahrzeugtür des zu reinigenden Fahrzeugs positioniert. Eine Höhe einer Transporteinrichtung der Hebevorrichtung ist einstellbar, sodass eine Höhe der Roboteraufnahme auf eine Höhe des Fahrzeugbodens gebracht werden kann. Sind die Höhen angepasst, so fährt der mindestens eine mobile Reinigungsroboter von der Roboteraufnahme auf gleicher Höhe wie der Fahrzeugboden durch die geöffnete Fahrzeugtür hindurch auf den Fahrzeugboden in den Innenraum des Fahrzeugs. Anschließend wird der mindestens eine Reinigungsroboter an einer vorgegebenen Position im Innenraum des Fahrzeugs positioniert, wobei der mindestens eine mobile Reinigungsroboter hierzu über den Fahrzeugboden an die vorgegebene Position fährt. An der vorgegebenen Position führt der mindestens eine Reinigungsroboter ein vorgegebenes Reinigungsprogramm durch, wobei das Reinigen ein Führen mindestens eines Reinigungswerkzeugs mittels eines Führungsmittels des Reinigungsroboters umfasst. Das Reinigen kann beispielsweise ein Absaugen von Oberflächen in einem Bereich um die vorgegebene Position herum umfassen. Ist das Reinigungsprogramm durchgeführt, so wird der mindestens eine Reinigungsroboter wieder aus dem Innenraum des Fahrzeugs entfernt. Hierzu fährt der mindestens eine mobile Reinigungsroboter über den Fahrzeugboden zurück in einen Türbereich des Fahrzeugs und anschließend durch die geöffnete Fahrzeugtür hindurch zurück auf die Roboteraufnahme der mobilen Hebevorrichtung.

Ein Vorteil der Erfindung ist, dass der mindestens eine Reinigungsroboter direkt an einer vorgegebenen Position in dem Innenraum des Fahrzeugs positioniert werden kann. Da der mobile Reinigungsroboter mittels eines Führungsmittels arbeitet, können daher auch schwer zugängliche Bereiche des Innenraums gereinigt werden, welche ansonsten nur schwer zugänglich sind. So kann das Führungsmittel mit dem Reinigungswerkzeug insbesondere auch Orte erreichen, die der mobile Reinigungsroboter nicht direkt anfahren kann, beispielsweise kann das Reinigungswerkzeug mittels des Führungsmittels in verwinkelte Bereiche oder in Ablagefächer eingreifen.

Der Fahrzeugboden des Fahrzeugs soll insbesondere im Wesentlichen eben ausgebildet sein, sodass der mindestens eine Reinigungsroboter sich auf diesem bewegen kann und sämtliche Bereiche des Innenraums zumindest mit dem mindestens einen Führungsmittel erreichen kann.

Eine bewegbare Basiseinrichtung eines mobilen Reinigungsroboters kann einen Radantrieb und/oder einen Kettenantrieb oder ein sonstiges geeignetes Fortbewegungsmittel umfassen.

Es kann vorgesehen sein, dass der mindestens eine mobile Reinigungsroboter nach Durchführen des vorgegebenen Reinigungsprogramms mindestens ein weiteres Mal im Innenraum neu angeordnet wird, sodass an mindestens einer weiteren Position ein weiteres Reinigungsprogramm durchgeführt werden kann.

Ein Reinigungswerkzeug kann je nach Anwendungsszenario unterschiedlich ausgebildet sein. Es kann beispielsweise eine Düse zum Absaugen oder Einblasen von Luft oder einem anderen Gas oder Gasgemisch umfassen. Ferner kann das Reinigungswerkzeug auch mechanische Elemente aufweisen, wie Lamellen oder Noppen. Das Reinigungswerkzeug kann auch ein Reinigungstuch und/oder einen Reinigungsschwamm aufweisen. Es kann auch ein Magazin mit mehreren Reinigungswerkzeugen vorgesehen sein, wobei ein in dem Magazin vorgehaltenes Reinigungswerkzeug nach Bedarf bzw. in Abhängigkeit des jeweiligen Reinigungsprogramms entnommen und verwendet wird. Das Reinigungswerkzeug kann auch als Greifwerkzeug, beispielsweise zum Aufgreifen von Müll oder Gegenständen, ausgebildet sein.

Der mobile Reinigungsroboter kann hierbei auch weitere zum Reinigen notwendige Einrichtungen umfassen wie beispielsweise eine Absaugeinrichtung, Aktoren, Sensoren, Vorrats- und Sammelbehälter für Reinigungsmedien und/oder Abfall etc.

Der mindestens eine mobile Reinigungsroboter und die mindestens eine Hebevorrichtung sowie gegebenenfalls auch das Fahrzeug können über Kommunikationsschnittstellen miteinander kommunizieren, um das Verfahren auszuführen und insbesondere das Einbringen, das Anordnen und das Entfernen zu koordinieren. Die Kommunikationsschnittstellen können drahtgebunden oder drahtlos sein. Beispielsweise können Wireless Local Area Network (WLAN), Bluetooth, der Controller Area Network (CAN)-Bus oder ein sonstiges Bussystem verwendet werden. Auch eine Kommunikation mit einem Leitstand kann erfolgen.

Der mindestens eines mobile Reinigungsroboter und die mobile Hebevorrichtung umfassen insbesondere eine mobile Energieversorgung in Form von Batterien.

Das mindestens eine Führungsmittel weist in Bezug auf ein an diesem angeordneten Reinigungswerkzeug insbesondere mehrere translatorische und/oder mehrere rotatorische Freiheitsgrade auf. Hierdurch lässt sich das mindestens eine Reinigungswerkzeug zumindest in einem Aktionsradius des Führungsmittels in beliebiger Orientierung anordnen, sodass das mindestens eine Reinigungswerkzeug auch an schwer zugängliche Bereiche geführt werden kann.

Ein typisches, jedoch beispielhaftes Anwendungsszenario wird im Folgenden beschrieben. Ein Fahrzeug soll gereinigt werden und fährt hierzu, insbesondere automatisiert, in ein Servicezentrum. Dort wird das Fahrzeug an einer vorgegebenen Position geparkt und die Fahrzeugtüren werden geöffnet. Die mobile Hebevorrichtung mit einem in der Roboteraufnahme angeordneten mobilen Reinigungsroboter positioniert sich neben einer geöffneten Fahrzeugtür des Fahrzeugs. Eine Höhe einer Transporteinrichtung der mobilen Hebevorrichtung wird eingestellt, sodass sich die Roboteraufnahme der Hebevorrichtung auf einer Höhe mit einem Fahrzeugboden des Fahrzeugs befindet. Der mindestens eine Reinigungsroboter fährt von der Roboteraufnahme über den Fahrzeugboden in den Innenraum des Fahrzeugs und von dort weiter über den Fahrzeugboden an eine vorgegebene Position im Innenraum. Der mobile Reinigungsroboter führt nach dem Einbringen und Anordnen ein vorgegebenes Reinigungsprogramm durch. Beispielsweise kann ein Bereich des Innenraums durch Absaugen von Schmutzpartikeln und/oder Staub oder ein Fenster mittels eines Reinigungstuches gereinigt werden. Nach dem Durchführen des Reinigungsprogramms fährt der mobile Reinigungsroboter über den Fahrzeugboden durch die geöffnete Fahrzeugtür aus dem Innenraum des Fahrzeugs zurück in die Roboteraufnahme der mobilen Hebevorrichtung. Die mobile Hebevorrichtung wird danach von dem Fahrzeug wegbewegt und die Fahrzeugtüren werden wieder geschlossen. Das Fahrzeug kann anschließend gereinigt weiterbetrieben werden und verlässt, insbesondere automatisiert gefahren, das Servicezentrum.

Ein Fahrzeug soll insbesondere ein Landfahrzeug, insbesondere ein Kraftfahrzeug sein. Insbesondere soll das Fahrzeug ein automatisiert gefahrenes Kraftfahrzeug sein. Ein Fahrzeug kann jedoch auch ein sonstiges Land-, Luft- oder Wasserfahrzeug sein, bei denen das Verfahren angewandt werden kann, beispielsweise ein Schienenfahrzeug.

Die Roboteraufnahme ist insbesondere als Fläche oder Fach ausgebildet, auf der bzw. in dem mindestens ein mobiler Reinigungsroboter angeordnet werden kann. Es kann vorgesehen sein, dass die Roboteraufnahme Befestigungsmittel zum Befestigen des mindestens einen mobilen Reinigungsroboters aufweist, sodass dieser dort, beispielsweise während eines Transports mit der mobilen Hebevorrichtung, fixiert werden kann. Die Roboteraufnahme kann auch eine Leiteinrichtung, beispielsweise in Form von Führungsschienen, aufweisen, mittels derer ein Einfahren und Anordnen des mindestens eines Reinigungsroboters in der Roboteraufnahme erleichtert wird.

Es kann vorgesehen sein, dass die Roboteraufnahme mindestens eine Ladeeinrichtung aufweist, mit der ein in der Roboteraufnahme angeordneter mobiler Reinigungsroboter mit Energie versorgt und/oder eine Batterie des mobilen Reinigungsroboters aufgeladen werden kann. Ferner kann vorgesehen sein, dass die Roboteraufnahme auch mindestens ein Reinigungsmedium und/oder mindestens ein Reinigungswerkzeug für den mindestens einen Reinigungsroboter aufbewahren und bereitstellen kann.

In einer Ausführungsform des mobilen Reinigungsroboters ist vorgesehen, dass der mobile Reinigungsroboter eine Sensorik zum Erfassen eines Umfelds in dem Innenraum des Fahrzeugs umfasst, wobei die Steuerung derart ausgebildet ist, die bewegbare Basiseinrichtung und/oder das mindestens eine Führungsmittel zusätzlich auf Grundlage von erfassten Sensordaten der Sensorik anzusteuern.

Alternativ oder zusätzlich kann vorgesehen sein, dass der mobile Reinigungsroboter von einer äußeren Steuerung gesteuert bzw. geregelt wird. Dies kann beispielsweise eine in dem Fahrzeugs angeordnete Steuerung sein. Die äußere Steuerung kann jedoch auch außerhalb des Fahrzeugs angeordnet sein, beispielsweise in einem Leitstand und/oder in der mobilen Hebevorrichtung. Die äußere Steuerung kommuniziert dann mit dem mobilen Reinigungsroboter bzw. dessen Steuerung über eine entsprechende Kommunikationsschnittstelle, um dem mobilen Reinigungsroboter Steuersignale zu übermitteln.

In einer weiteren Ausführungsform des mobilen Reinigungsroboters ist vorgesehen, dass das mindestens eine Führungsmittel Kopplungsmittel zum lösbaren mechanischen Verbinden des mindestens einen Führungsmittels mit mindestens einem Reinigungswerkzeug aufweist. Auf diese Weise können unterschiedliche Reinigungswerkzeuge verwendet werden. Es kann hierbei beispielsweise vorgesehen sein, dass der Reinigungsroboter vor dem Durchführen des Verfahrens mit mindestens einem Reinigungswerkzeug bestückt wird, indem dieses angekoppelt wird. Nach dem Durchführen des Verfahrens kann das Reinigungswerkzeug wieder abgekoppelt werden.

Es kann auch vorgesehen sein, dass der mobile Reinigungsroboter und/oder die mobile Hebevorrichtung mindestens ein Magazin umfassen, in dem mehrere Reinigungswerkzeuge vorgehalten werden, sodass ein mobiler Reinigungsroboter bei Bedarf mit einem benötigten Reinigungswerkzeug bestückt werden kann.

In einer Ausführungsform des mobilen Reinigungsroboters ist vorgesehen, dass das mindestens eine Führungsmittel ein Führungsarm ist. Ein solcher Führungsarm kann insbesondere als mehrgliedriger und mehrgelenkiger Führungsarm ausgebildet sein und mehrere rotatorische und translatorische Freiheitsgrade aufweisen.

In einer Ausführungsform ist vorgesehen, dass mindestens eine Reinigungsrobotereinheit mittels des mindestens einen mobilen Reinigungsroboters an eine jeweils vorgegebene Position im Innenraum des Fahrzeugs transportiert und an dieser angeordnet wird. Auf diese Weise kann beispielsweise eine für eine spezielle Reinigungsaufgabe ausgebildete Reinigungsrobotereinheit an einer vorgegebenen Position im Innenraum angeordnet werden. Es kann beispielsweise vorgesehen sein, dass ein mobiler Reinigungsroboter mehrere Reinigungsrobotereinheiten transportiert. Der mobile Reinigungsroboter fährt dann zu der für den mobilen Reinigungsroboter vorgegebenen Position im Innenraum und ordnet dort die mehreren Reinigungsrobotereinheiten jeweils an den für diese jeweils vorgegebenen Positionen an. Beispielsweise können die Reinigungsrobotereinheiten auf einem Fahrzeugsitz ausgesetzt werden, wo diese dann dort ein Unterreinigungsprogramm durchführen, beispielsweise Schmutzpartikel und/oder Staub abzusaugen oder Müll einzusammeln. Zum Ausführen des Unterreinigungsprogramms weist eine Reinigungsrobotereinheit mindestens ein Reinigungswerkzeug auf. Insbesondere schwer zugängliche Bereiche im Innenraum des Fahrzeugs lassen sich mit Hilfe der mindestens einen Reinigungsrobotereinheit verbessert reinigen, da die mindestens eine Reinigungsrobotereinheit auf den schwer zugänglichen Bereich spezialisiert ausgebildet sein kann.

Eine Reinigungsrobotereinheit ist insbesondere hinsichtlich seiner Ausmaße und/oder seines Volumens kleiner ausgebildet als ein zugehöriger mobiler Reinigungsroboter. Eine Reinigungsrobotereinheit ist insbesondere auf ein Unterreinigungsprogramm spezialisiert. Ein solches Unterreinigungsprogramm umfasst insbesondere das Reinigen lediglich eines kleinen Teilbereichs des Innenraums des Fahrzeugs und/oder eine spezielle hinsichtlich eines Umfangs beschränkte Reinigung. So kann beispielsweise vorgesehen sein, dass eine Reinigungsrobotereinheit ausschließlich zum Reinigen eines einzigen Sitzkissens eines Fahrzeugsitzes oder eines Ablagefachs oder einer einzigen Fensterscheibe oder des mittleren Rückspiegels des Fahrzeugs ausgebildet ist. Im Beispiel einer Reinigung des mittleren Rückspiegels wird die Reinigungsrobotereinheit beispielsweise von dem Führungsmittel des mobilen Reinigungsroboters an dem mittleren Rückspiegel angeordnet, beispielsweise indem die Reinigungsrobotereinheit an den mittleren Rückspiegel geklemmt wird. Anschließend reinigt die Reinigungsrobotereinheit den mittleren Rückspiegel mittels eines Reinigungstuches. Nach dem Reinigen wird die Reinigungsrobotereinheit mittels des Führungsmittels des mobilen Reinigungsroboters wieder entfernt und wieder in der Einheitsaufnahme angeordnet. Die beschriebene Spezialisierung auf beschränkte Reinigungsaufgaben und -bereiche bietet den Vorteil, dass maßgeschneiderte Insellösungen auch für schwer zugängliche und schwer zu reinigende Bereiche bereitgestellt werden können. Werden mehrere Reinigungsrobotereinheiten verwendet, so kann trotzdem ein zügiges Reinigen sämtlicher Bereiche des Innenraums des Fahrzeugs erfolgen.

Zeitgleich zum Ausführen eines Unterreinigungsprogramms mittels einer Reinigungsrobotereinheit kann natürlich weiterhin ein Reinigungsprogramm mittels des mobilen Reinigungsroboters erfolgen. Es kann hierdurch eine hinsichtlich Umfang und Art maßgeschneiderte automatisierte Reinigung für ein Fahrzeug bereitgestellt werden.

In einer Ausführungsform des mobilen Reinigungsroboters ist entsprechend vorgesehen, dass der mobile Reinigungsroboter mindestens eine Einheitsaufnahme zum Aufnehmen und Transportieren mindestens einer Reinigungsrobotereinheit umfasst.

Es kann vorgesehen sein, dass die Einheitsaufnahme mindestens eine Ladeeinrichtung aufweist, mit der eine in der Einheitsaufnahme angeordnete Reinigungsrobotereinheit mit Energie versorgt und/oder eine Batterie der Reinigungsrobotereinheit aufgeladen werden kann. Ferner kann vorgesehen sein, dass die Einheitsaufnahme auch mindestens ein Reinigungsmedium und/oder mindestens ein Reinigungswerkzeug für die mindestens eine Reinigungsrobotereinheit aufbewahren und bereitstellen kann.

In einer weiterbildenden Ausführungsform ist vorgesehen, dass die mindestens eine Reinigungsrobotereinheit mittels eines Führungsmittels des mindestens einen mobilen Reinigungsroboters an einer vorgegebenen Position im Innenraum des Fahrzeugs angeordnet und nach Durchführen eines Unterreinigungsprogramms mittels des Führungsmittels wieder aufgenommen wird. Durch Verwenden eines Führungsmittels, beispielsweise eines Führungsarms, kann die mindestens eine Reinigungsrobotereinheit auch an schwer zugängliche Bereiche im Innenraum des Fahrzeugs angeordnet und orientiert werden. Das Führungsmittel kann beispielsweise ein zum Führen des mindestens einen Reinigungswerkzeugs verwendetes Führungsmittel sein. Alternativ kann auch ein zusätzliches Führungsmittel zum Anordnen der mindestens einen Reinigungsrobotereinheit vorgesehen sein.

Nachfolgend wird die Erfindung anhand bevorzugter Ausführungsbeispiele unter Bezugnahme auf die Figuren näher erläutert. Hierbei zeigen:
- Fig.1: eine schematische Darstellung einer Ausführungsform des mobilen Reinigungsroboters zum Reinigen eines Innenraums eines Fahrzeugs;
- Fig. 2: eine schematische Darstellung einer Ausführungsform der mobilen Hebevorrichtung;
- Fig. 3: eine schematische Darstellung einer weiteren Ausführungsform des mobilen Reinigungsroboters mit einer Einheitsaufnahme;
- Fig. 4: ein schematisches Ablaufdiagramm einer Ausführungsform des Verfahrens zum Reinigen eines Innenraums eines Fahrzeugs.

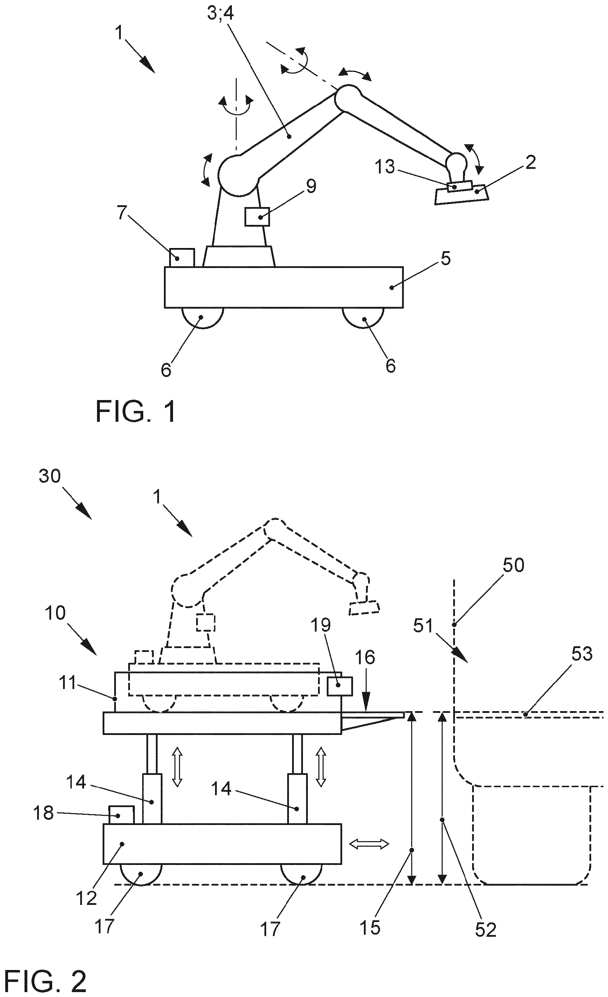

In Fig. 1 ist eine schematische Darstellung einer Ausführungsform des mobilen Reinigungsroboters 1 zum Reinigen eines Innenraums eines Fahrzeugs gezeigt. Der mobile Reinigungsroboter 1 umfasst ein Reinigungswerkzeug 2, ein Führungsmittel 3, welches als mehrgliedriger und mehrgelenkiger Führungsarm 4 mit mehreren translatorischen und rotatorischen Freiheitsgraden ausgebildet ist. Ferner umfasst der mobile Reinigungsroboter 1 eine bewegbare Basiseinrichtung 5, welche durch mehrere Räder 6 angetrieben werden kann, und eine Steuerung 7. Die Steuerung 7 steuert die bewegbare Basiseinrichtung 5 und das mindestens eine Führungsmittel 3 an, sodass an einer vorgegebenen Position im Innenraum des Fahrzeugs ein vorgegebenes Reinigungsprogramm durchgeführt werden kann.

Es kann vorgesehen sein, dass der mobile Reinigungsroboter 1 ferner eine Sensorik 9 zum Erfassen eines Umfeldes aufweist. Die Steuerung 7 steuert bzw. regelt die bewegbare Basiseinrichtung 5 und/oder das Führungsmittel 3 dann zusätzlich auf Grundlage von erfassten Sensordaten der Sensorik 9. Insbesondere kann der mobile Reinigungsroboter 1 vollautomatisiert betrieben werden, das heißt er fährt vollautomatisiert von einer mobilen Hebevorrichtung in den Innenraum des Fahrzeug, führt dort an einer vorgegebenen Position ein vorgegebenes Reinigungsprogramm durch und fährt automatisiert wieder auf die mobile Hebevorrichtung zurück.

Es kann weiter vorgesehen sein, dass das mindestens eine Führungsmittel 3 Kopplungsmittel 13 zum lösbaren mechanischen Verbinden des mindestens einen Führungsmittels 3 mit mindestens einem Reinigungswerkzeug 2 aufweist. Die Kopplungsmittel 13 können beispielsweise als Rast-, Klemm-, Steck- oder Schraubverbindung ausgebildet sein, die sich auf lösbare Weise mit komplementären Kopplungsmitteln am Reinigungswerkzeug 2 verbinden lassen.

In Fig. 2 ist eine schematische Darstellung einer Ausführungsform der mobilen Hebevorrichtung 10 gezeigt. Die mobile Hebevorrichtung 10 umfasst eine Roboteraufnahme 11 und eine Transporteinrichtung 12. Die Roboteraufnahme 11 ist derart ausgebildet, dass mindestens ein mobiler Reinigungsroboter 1 in diesem angeordnet werden kann. Die Roboteraufnahme 11 kann beispielsweise als Abstellfläche für den mindestens einen mobilen Reinigungsroboter 1 ausgebildet sein. Es kann hierbei vorgesehen sein, dass der mindestens eine mobile Reinigungsroboter 1 fixiert wird oder fixiert ist, wenn dieser in der Reinigungsaufnahme 11 angeordnet ist, beispielsweise mittels einer Rast- oder Klemmverbindung, sodass ein sicherer Transport zusammen mit der mobilen Hebevorrichtung erfolgen kann. Die mobile Hebevorrichtung 10 umfasst ferner Hebemittel 14, welche beispielsweise als hydraulische Aktoren oder als Linearmotoren ausgebildet sind und eine Höhe 15 einer Oberseite 16 der mobilen Hebevorrichtung 10 an eine Höhe 52 eines Fahrzeugbodens 51 eines Fahrzeugs 50 anpassen können.

Die Transporteinrichtung 12 kann durch mehrere Räder 17 angetrieben und bewegt werden, um die mobile Hebevorrichtung 10 zu bewegen und beispielsweise neben einer geöffneten Fahrzeugtür eines zu reinigenden Fahrzeugs 50 anzuordnen.

Die mobile Hebevorrichtung 10 umfasst ferner eine Steuerung 18 zum Ansteuern der Transporteinrichtung 12 und der Hebemittel 14. Ferner kann die mobile Hebevorrichtung 18 eine Sensorik 19 zum Erfassen eines Umfelds aufweisen, wobei die Steuerung 18 die Transporteinrichtung 12 zusätzlich auf Grundlage von erfassten Umfelddaten der Sensorik 19 steuern kann.

Der mobile Reinigungsroboter 1 und die mobile Hebevorrichtung 10 bilden zusammen ein System 30 zum Reinigen eines Innenraums 51 eines Fahrzeugs 50 aus.

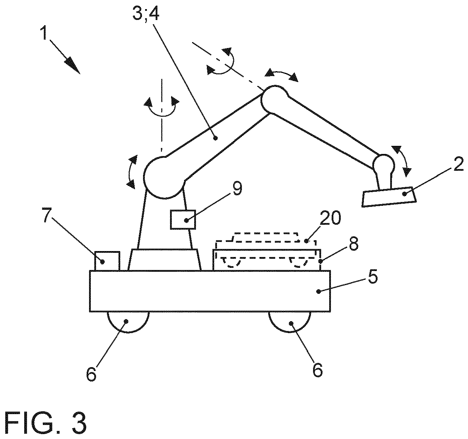

In Fig. 3 ist eine schematische Darstellung einer weiteren Ausführungsform des mobilen Reinigungsroboters 1 zum Reinigen eines Innenraums eines Fahrzeugs gezeigt. Der mobile Reinigungsroboter 1 ist prinzipiell identisch zu der in der Fig. 1 gezeigten Ausführungsform ausgebildet, gleiche Bezugszeichen bezeichnen gleiche Merkmale und Begriffe. Zusätzlich weist der mobile Reinigungsroboter 1 eine Einheitsaufnahme 8 auf. In diese Einheitsaufnahme 8 kann mindestens eine Reinigungsrobotereinheit 20 angeordnet werden. Die mindestens eine Reinigungsrobotereinheit 20 kann mittels des Führungsmittels 3 bzw. mittels des Führungsarms 4 an einer vorgegebenen Position im Innenraum des Fahrzeugs angeordnet werden, um an dieser vorgegebenen Position ein Unterreinigungsprogramm durchzuführen. Nach Durchführen des Unterreinigungsprogramms sammelt der Führungsarm 4 des mobilen Reinigungsroboters 1 die mindestens eine Reinigungsrobotereinheit 20 wieder auf und ordnet diese wieder in der Einheitsaufnahme 8 an.

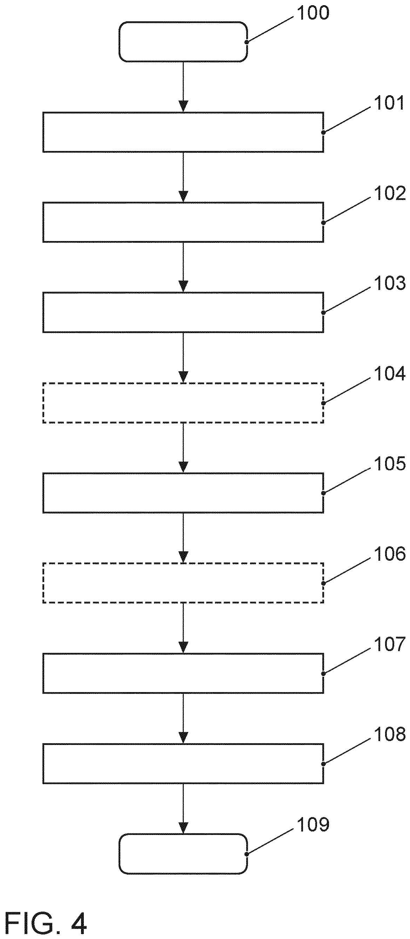

In Fig. 4 ist ein schematisches Ablaufdiagramm einer Ausführungsform des Verfahrens zum Reinigen eines Innenraums eines Fahrzeugs gezeigt.

In einer Ausgangssituation fährt ein Fahrzeug, insbesondere automatisiert, zum Reinigen beispielsweise in ein Servicezentrum. Nach einem Abstellen des Fahrzeugs in einer vorgegebenen Position werden die Fahrzeugtüren des Fahrzeugs geöffnet. Anschließend wird das Verfahren zum Reinigen des Fahrzeugs gestartet 100.

In einem Verfahrensschritt 101 wird eine mobile Hebevorrichtung neben eine geöffnete Fahrzeugtür gefahren, indem eine Transporteinrichtung der mobilen Hebevorrichtung entsprechend angesteuert wird. Es kann vorgesehen sein, dass mittels einer Sensorik ein Umfeld erfasst wird und das Ansteuern auf Grundlage von erfassten Sensordaten erfolgt. Auf der mobilen Hebevorrichtung ist ein mobiler Reinigungsroboter in einer Roboteraufnahme angeordnet.

In einem Verfahrensschritt 102 wird eine Oberseite der mobilen Hebevorrichtung auf eine Höhe mit einem Fahrzeugboden des Fahrzeugs gebracht. Hierzu wird beispielsweise von der Sensorik eine Höhe des Fahrzeugbodens bestimmt. Alternativ oder zusätzlich kann die Höhe des Fahrzeugbodens auch auf andere Weise ermittelt werden, beispielsweise kann diese beim Fahrzeug oder bei einem Leitstand des Servicezentrums über eine Kommunikationsschnittstelle abgefragt werden. Die Höhe der Oberseite wird beispielsweise mit Hilfe von hydraulischen Aktoren oder Linearmotoren der Transporteinrichtung eingestellt.

In einem Verfahrensschritt 103 fährt der mobile Reinigungsroboter von der Roboteraufnahme durch die geöffnete Fahrzeugtür hierdurch in den Innenraum des Fahrzeugs hinein. Im Innenraum fährt der mobile Reinigungsroboter auf dem Fahrzeugboden weiter an eine vorgegebene Position.

In einem Verfahrensschritt 104 kann vorgesehen sein, dass der mobile Reinigungsroboter eine auf einer Einheitsaufnahme mittransportierte Reinigungsrobotereinheit mittels eines Führungsmittels im Innenraum an einer für die Reinigungsrobotereinheit vorgegebene Position anordnet, beispielsweise indem das Führungsmittel sich an die Reinigungsrobotereinheit mechanisch ankoppelt und die Reinigungsrobotereinheit mittels des Führungsmittels auf einer zu reinigenden Sitzfläche eines Fahrzeugsitzes absetzt. Dort führt die Reinigungsrobotereinheit dann ein Unterreinigungsprogramm durch, in dem beispielsweise die Sitzfläche abgesaugt wird.

In einem Verfahrensschritt 105 führt der mobile Reinigungsroboter an der vorgegebenen Position ein Reinigungsprogramm durch. Beispielsweise kann mittels eines an dem Führungsmittel angeordneten Reinigungswerkzeugs ein Bereich durch Absaugen von Schmutzpartikeln und/oder Staub befreit werden oder ein Fenster kann mittels eines Reinigungsschwamms oder Reinigungstuchs gereinigt werden. Hierzu führt das Führungsmittel das Reinigungswerkzeug über die zu reinigenden Bereiche.

Ist das Reinigungsprogramm vollständig durchgeführt worden, so wird in einem Verfahrensschritt 106 gegebenenfalls die Reinigungsrobotereinheit mittels des Führungsmittels wieder eingesammelt, indem die Reinigungsrobotereinheit im Umfeld erkannt wird, das Führungsmittel an die Reinigungsrobotereinheit angekoppelt wird und diese anschließend wieder auf der Einheitsaufnahme angeordnet wird.

In einem Verfahrensschritt 107 fährt der mobile Reinigungsroboter von der vorgegebenen Position über den Fahrzeugboden zurück zur Fahrzeugtür und in die Roboteraufnahme der mobilen Hebeeinrichtung.

In einem Verfahrensschritt 108 wird die mobile Hebevorrichtung wieder vom Fahrzeug wegbewegt.

Anschließend ist das Verfahren beendet 109.

Es kann vorgesehen sein, dass weitere mobile Hebevorrichtungen und/oder weitere mobile Reinigungsroboter und/oder weitere Reinigungsrobotereinheiten verwendet werden. Die einzelnen Verfahrensschritte werden dann entsprechend mit diesen bzw. für diese ausgeführt.

### Bezugszeichenliste

- 1: mobiler Reinigungsroboter
- 2: Reinigungswerkzeug
- 3: Führungsmittel
- 4: Führungsarm
- 5: bewegbare Basiseinrichtung
- 6: Rad
- 7: Steuerung
- 8: Einheitsaufnahme
- 9: Sensorik
- 10: mobile Hebevorrichtung
- 11: Roboteraufnahme
- 12: Transporteinrichtung
- 13: Kopplungsmittel
- 14: Hebemittel
- 15: Höhe
- 16: Oberseite
- 17: Rad
- 18: Steuerung
- 19: Sensorik
- 20: Reinigungsrobotereinheit
- 30: System
- 50: Fahrzeug
- 51: Innenraum
- 52: Höhe
- 53: Fahrzeugboden
- 100-109: Verfahrensschritte

## Patentansprüche

1. Verfahren zum Reinigen eines Innenraums (51) eines Fahrzeugs (50), umfassend die folgenden Schritte:
Einbringen von mindestens einem mobilen Reinigungsroboter (1) auf einen Fahrzeugboden (53) im Innenraum (51) des Fahrzeugs (50) durch eine geöffnete Fahrzeugtür mittels einer mobilen Hebevorrichtung (10), wobei der mindestens eine mobile Reinigungsroboter (1) von einer Roboteraufnahme (11) der mobilen Hebevorrichtung (10) auf einer Höhe (15, 52) des Fahrzeugbodens (53) durch eine geöffnete Fahrzeugtür in den Innenraum (51) fährt,
Anordnen des mindestens einen mobilen Reinigungsroboters (1) an einer vorgegebenen Position auf dem Fahrzeugboden (53) im Innenraum (51) des Fahrzeugs (50), wobei der mobile Reinigungsroboter (1) über den Fahrzeugboden (53) an die vorgegebene Position fährt,
Durchführen eines vorgegebenen Reinigungsprogramms an der vorgegebenen Position mittels des mindestens einen mobilen Reinigungsroboters (1), wobei das Reinigen ein Führen mindestens eines Reinigungswerkzeugs (2) mittels eines Führungsmittels (3) des mobilen Reinigungsroboters (1) umfasst,
Entfernen des mindestens einen mobilen Reinigungsroboters (1) aus dem Innenraum (51) des Fahrzeugs (50), wobei der mindestens eine mobile Reinigungsroboter (1) zurück in die Roboteraufnahme (11) der mobilen Hebevorrichtung (10) fährt.

2. Verfahren nach Anspruch 1, **dadurch gekennzeichnet, dass** mindestens eine Reinigungsrobotereinheit (20) mittels des mindestens einen mobilen Reinigungsroboters (1) an eine jeweils vorgegebene Position im Innenraum (51) des Fahrzeugs (50) transportiert und an dieser angeordnet wird.

3. Verfahren nach Anspruch 2, **dadurch gekennzeichnet, dass** die mindestens eine Reinigungsrobotereinheit (20) mittels eines Führungsmittels (3) des mindestens einen mobilen Reinigungsroboters (1) an einer vorgegebenen Position im Innenraum (51) des Fahrzeugs (50) angeordnet und nach Durchführen eines Unterreinigungsprogramms mittels des Führungsmittels (3) wieder aufgenommen wird.

4. Mobiler Reinigungsroboter (1) zum Reinigen eines Innenraums (51) eines Fahrzeugs (50), umfassend:
mindestens ein Reinigungswerkzeug (2),
mindestens ein Führungsmittel (3) zum Aufnehmen und Führen des mindestens einen Reinigungswerkzeugs (2),
eine bewegbare Basiseinrichtung (5) zum Bewegen des Reinigungsroboters (1) auf einem Fahrzeugboden (51) im Innenraum (51) des Fahrzeugs (50), und
eine Steuerung (7) zum Ansteuern der bewegbaren Basiseinrichtung (5) und des mindestens einen Führungsmittels (3), sodass an einer vorgegebenen Position im Innenraum (51) ein vorgegebenes Reinigungsprogramm durchgeführt werden kann,
**dadurch gekennzeichnet, dass**
die Steuerung (7) dazu eingerichtet ist, den mobilen Reinigungsroboter (1) von einer Roboteraufnahme (11) einer mobilen Hebevorrichtung (10) aus an die vorgegebene Position in dem Innenraum (51) des Fahrzeugs (50) zu fahren und nach Durchführen des vorgegebenen Reinigungsprogramms wieder zurück in die Roboteraufnahme (11) zu fahren.

5. Mobiler Reinigungsroboter (1) nach Anspruch 4, **gekennzeichnet durch** eine Sensorik (9) zum Erfassen eines Umfelds in dem Innenraum (51) des Fahrzeugs (50), wobei die Steuerung (7) derart ausgebildet ist, die bewegbare Basiseinrichtung (5) und/oder das mindestens eine Führungsmittel (3) zusätzlich auf Grundlage von erfassten Sensordaten der Sensorik (9) anzusteuern.

6. Mobiler Reinigungsroboter (1) nach Anspruch 4 oder 5, **dadurch gekennzeichnet, dass** das mindestens eine Führungsmittel (3) Kopplungsmittel (13) zum lösbaren mechanischen Verbinden des mindestens einen Führungsmittels (3) mit mindestens einem Reinigungswerkzeug (2) aufweist.

7. Mobiler Reinigungsroboter (1) nach einem der Ansprüche 4 bis 6, **dadurch gekennzeichnet, dass** das mindestens eine Führungsmittel (3) ein Führungsarm (4) ist.

8. Mobiler Reinigungsroboter (1) nach einem der Ansprüche 4 bis 7, **gekennzeichnet durch** mindestens eine Einheitsaufnahme (8) zum Aufnehmen und Transportieren mindestens einer Reinigungsrobotereinheit (20).

9. System (30) zum Reinigen eines Innenraums (51) eines Fahrzeugs (50), umfassend:
mindestens eine mobile Hebevorrichtung (10), umfassend mindestens eine Roboteraufnahme (11) zum Aufnehmen von mindestens einem mobilen Reinigungsroboter (1) gemäß einem der Ansprüche 4 bis 8, und
eine Transporteinrichtung (12), wobei die Transporteinrichtung (12) höhenverstellbar ausgebildet ist, sodass die mindestens eine Roboteraufnahme (11) auf eine Höhe eines Fahrzeugbodens (51) eines Fahrzeugs (50) gebracht werden kann; und
mindestens einen mobilen Reinigungsroboter (1) gemäß einem der Ansprüche 4 bis 8.

## Claims

1. A method for cleaning an interior (51) of a motor vehicle (50), comprising the following steps:
placement at least one mobile cleaning robot (1) onto a vehicle floor (53) in the interior (51) of the vehicle (50) through an open vehicle door by means of a mobile lifting device (10), wherein the at least one mobile cleaning robot (1) drives from a robot holder (11) of the mobile lifting device (10) at a height (15, 52) of the vehicle floor (53) through an open vehicle door into the interior (51),
arranging the at least one mobile cleaning robot (1) at a predetermined position on the vehicle floor (53) in the interior (51) of the vehicle (50), wherein the mobile cleaning robot (1) drives across the vehicle floor (53) to the predetermined position,
carrying out a predetermined cleaning program at the predetermined position by means of the at least one mobile cleaning robot (1), wherein the cleaning comprises guiding at least one cleaning tool (2) by means of a guide means (3) of the mobile cleaning robot (1),
removing the at least one mobile cleaning robot (1) from the interior (51) of the vehicle (50), wherein the at least one mobile cleaning robot (1) drives back into the robot holder (11) of the mobile lifting device (10).

2. The method according to claim 1, **characterized in that** at least one cleaning robot unit (20) is transported in each case to a predetermined position in the interior (51) of the vehicle (50) by means of the at least one mobile cleaning robot (1) and is arranged at this position.

3. The method according to claim 2, **characterized in that** the at least one cleaning robot unit (20) is arranged at a predetermined position in the interior (51) of the vehicle (50) by means of a guide means (3) of the at least one mobile cleaning robot (1) and is picked up by means of the guide means (3) after carrying out a sub-cleaning program.

4. A mobile cleaning robot (1) for cleaning an interior (51) of a vehicle (50), comprising:
at least one cleaning tool (2),
at least one guide means (3) for holding and guiding the cleaning tool (2),
a movable base device (5) for moving the cleaning robot (1) on a vehicle floor (51) in the interior (51) of the vehicle (50), and a controller (7) for controlling the movable base device (5) and the at least one guide means (3) so that a predetermined cleaning program can be carried out at a predetermined position in the interior (51),
**characterized in that**
the controller (7) is designed to drive the mobile cleaning robot (1) from a robot holder (11) of a mobile lifting device (10) to the predetermined position in the interior (51) of the vehicle (50) and to drive it back into the robot holder (11) after carrying out the predetermined cleaning program.

5. The mobile cleaning robot (1) according to claim 4, **characterized by** a sensor system (9) for detecting an environment in the interior (51) of the vehicle (50), wherein the controller (7) is designed to control the movable base device (5) and/or the at least one guide means (3) additionally on the basis of detected sensor data of the sensor system (9).

6. The mobile cleaning robot (1) according to claim 4 or 5,
**characterized in that** the at least one guide means (3) comprises coupling means (13) for the releasable mechanically connection of the at least one guide means (3) to at least one cleaning tool (2).

7. The mobile cleaning robot (1) according to one of claims 4 to 6,
**characterized in that** the at least one guide means (3) is a guide arm (4).

8. The mobile cleaning robot (1) according to one of claims 4 to 7, **characterized by** at least one unit holder (8) for holding and transporting at least one cleaning robot unit (20).

9. A system (30) for cleaning an interior (51) of a vehicle (50), comprising: at least one mobile lifting device (10), comprising at least one robot holder (11) for holding at least one mobile cleaning robot (1) according to one of claims 4 to 8, and a transport device (12), wherein the transport device (12) is designed to be height-adjustable so that the at least one robot holder (11) can be brought to a height of a vehicle floor (51) of a vehicle (50); and at least one mobile cleaning robot (1) according to one of claims 4 to 8.

## Revendications

1. Procédé pour le nettoyage d'un habitacle (51) d'un véhicule (50), comprenant les étapes suivantes :
introduction d'au moins un robot de nettoyage mobile (1) sur un plancher de véhicule (53) dans l'habitacle (51) du véhicule (50) à travers une portière de véhicule ouverte à l'aide d'un dispositif de levage mobile (10), dans lequel l'au moins un robot de nettoyage mobile (1) se déplace d'un logement de robot (11) du dispositif de levage mobile (10) à une hauteur (15, 52) du plancher de véhicule (53) à travers une portière de véhicule ouverte dans l'habitacle (51),
agencement du au moins un robot de nettoyage mobile (1) à une position prédéfinie sur le plancher de véhicule (53) dans l'habitacle (51) du véhicule (50), dans lequel le robot de nettoyage mobile (1) se déplace sur le plancher de véhicule (53) jusqu'à la position prédéfinie,
exécution d'un programme de nettoyage prédéfini à la position prédéfinie à l'aide du au moins un robot de nettoyage mobile (1), dans lequel le nettoyage comprend un guidage d'au moins un outil de nettoyage (2) à l'aide d'un moyen de guidage (3) du robot de nettoyage mobile (1),
enlèvement du au moins un robot de nettoyage mobile (1) de l'habitacle (51) du véhicule (50), dans lequel l'au moins un robot de nettoyage mobile (1) revient dans le logement de robot (11) du dispositif de levage mobile (10).

2. Procédé selon la revendication 1, **caractérisé en ce qu'**au moins une unité de robot de nettoyage (20) est transportée à l'aide du au moins un robot de nettoyage mobile (1) à une position respectivement prédéfinie dans l'habitacle (51) du véhicule (50) et est disposée à cette position.

3. Procédé selon la revendication 2, **caractérisé en ce que** l'au moins une unité de robot de nettoyage (20) est disposée à une position prédéfinie dans l'habitacle (51) du véhicule (50) à l'aide d'un moyen de guidage (3) de l'au moins un robot de nettoyage mobile (1) et est reprise après l'exécution d'un programme de sous-nettoyage à l'aide du moyen de guidage (3).

4. Robot de nettoyage mobile (1) pour le nettoyage d'un habitacle (51) d'un véhicule (50), comprenant :
au moins un outil de nettoyage (2),
au moins un moyen de guidage (3) pour la réception et le guidage de l'au moins un outil de nettoyage (2),
un appareil de base mobile (5) pour le déplacement du robot de nettoyage (1) sur un plancher de véhicule (51) dans l'habitacle (51) du véhicule (50), et une commande (7) pour la commande de l'appareil de de base mobile (5) et du au moins un moyen de guidage (3), de sorte qu'un programme de nettoyage prédéfini peut être exécuté dans une position prédéfinie dans l'habitacle (51),
**caractérisé en ce que**
la commande (7) est conçue pour conduire le robot de nettoyage mobile (1) depuis un logement de robot (11) d'un dispositif de levage mobile (10) jusqu'à la position prédéfinie dans l'habitacle (51) du véhicule (50) et pour le ramener dans le logement de robot (11) après l'exécution du programme de nettoyage prédéfini.

5. Robot de nettoyage mobile (1) selon la revendication 4, **caractérisé par** un système de capteurs (9) pour la détection d'un environnement dans l'habitacle (51) du véhicule (50), dans lequel la commande (7) est conçue de manière à commander l'appareil de base mobile (5) et/ou l'au moins un moyen de guidage (3) en plus sur la base de données de capteurs détectées du système de capteurs (9).

6. Robot de nettoyage mobile (1) selon la revendication 4 ou 5, **caractérisé en ce que** l'au moins un moyen de guidage (3) présente des moyens d'accouplement (13) pour la liaison mécanique amovible du au moins un moyen de guidage (3) à au moins un outil de nettoyage (2).

7. Robot de nettoyage mobile (1) selon l'une des revendications 4 à 6, **caractérisé en ce que** l'au moins un moyen de guidage (3) est un bras de guidage (4).

8. Robot de nettoyage mobile (1) selon l'une des revendications 4 à 7, **caractérisé par** au moins un logement d'unité (8) pour la réception et le transport d'au moins une unité de robot de nettoyage (20).

9. Système (30) pour le nettoyage de l'habitacle (51) d'un véhicule (50), comprenant : au moins un dispositif de levage mobile (10) comprenant au moins un logement de robot (11) pour la réception d'au moins un robot de nettoyage mobile (1) selon l'une des revendications 4 à 8, et un appareil de transport (12), dans lequel l'appareil de transport (12) est conçu pour être réglable en hauteur, de sorte que l'au moins un logement de robot (11) peut être amené à une hauteur d'un plancher (51) d'un véhicule (50) ; et au moins un robot de nettoyage mobile (1) selon l'une des revendications 4 à 8.
